# NEUE EUROPÄISCHE PATENTSCHRIFT

(11) **EP 2 263 019 B2**
(45) Veröffentlichungstag und Bekanntmachung des Hinweises auf die Entscheidung über den Einspruch: **18.10.2017**
(45) Hinweis auf die Patenterteilung: 03.09.2014
(21) Anmeldenummer: 09732206.9
(22) Anmeldetag: 25.02.2009
(51) Int. Cl.: F16D 65/092

(54) **BREMSBELAG MIT ADAPTER FÜR SCHEIBENBREMSEN**
BRAKE LINING HAVING ADAPTER FOR DISC BRAKES
GARNITURE DE FREIN AVEC ADAPTATEUR POUR FREINS À DISQUE

(30) Priorität: 14.04.2008 DE 102008019003
(43) Veröffentlichungstag der Anmeldung: 22.12.2010
(73) Patentinhaber: TMD Friction Services GmbH, 51381 Leverkusen (DE)
(72) Erfinder: RÖHLING, Willmut, 53809 Ruppichteroth (DE)
(74) Vertreter: Müller, Eckhard
(86) Internationale Anmeldenummer: PCT/EP2009/001316
(87) Internationale Veröffentlichungsnummer: WO 2009/127293

(56) Entgegenhaltungen:
- DE-A1- 2 751 194
- DE-A1- 3 013 862
- DE-A1- 19 511 287
- DE-A1-102006 010 754
- DE-B3-102005 050 581
- DE-U1- 8 710 924
- JP-A- 2008 014 453
- US-E- R E36 313

## Beschreibung

Die vorliegende Erfindung betrifft einen Bremsbelag, insbesondere für eine Nutzfahrzeugscheibenbremse, mit einer Trägerplatte und einem daran angeordneten Reibbelag mit einem Adapter, dadurch bestimmt ist, mit einem Bremsstößel oder -kolben in Werkverbindung zustehen, wobei die Trägerplatte an ihrer dem Reibbelag abgewandten Seite zumindest einen Krafteinleitungsbereich aufweist, mit welchem ein mit einem Bremsstößel in Wirkverbindung stehender Adapter in Betriebsstellung der Bremse zur Anlage gelangt, wobei zur Fixierung von Adapter und Trägerplatte zumindest in Radialrichtung und Umfangsrichtung bezogen auf die Bremsscheibengeometrie, an der Trägerplatte Haltemittel vorgesehen sind, welche mit adapterseitig vorgesehenen Haltemitteln korrespondieren. Weiterhin betrifft die Erfindung auch eine Scheibenbremse mit einem derartigen Bremsbelag.

### Stand der Technik

Neuerdings werden Scheibenbremsen nicht nur für Personenkraftwagen, sondern auch für Nutzfahrzeuge mit einem zulässigen Gesamtgewicht im zweistelligen Tonnenbereich vermehrt eingesetzt. Aufgrund der größeren Masse und Motorleistung dieser Fahrzeuge müssen derartige Scheibenbremsen besondere Anforderungen hinsichtlich Bremsleistung und Zuverlässigkeit erfüllen.

Ein Bremsbelag mit den eingangs genannten Merkmalen ist bereits aus der DE 19 511 287 oder DE 197 54 740 A1 bekannt. Dabei weist die Bremsbacke einen Belagträger auf, der aus zwei laminar angeordneten Trägerelementen besteht. Die beiden Trägerelemente sind aus Unterschiedlichem Werkstoff gefertigt, um einerseits das Wärmedurchgangsverhalten der Bremsbacke und andererseits die Bremsgeräuschentstehung positiv zu beeinflussen. Die beiden Trägerelemente sind unter Verwendung einer Kleberzwischenschicht miteinander verbunden. Zur Verstärkung des gegenseitigen Haltes der beiden Trägerelemente aneinander, und zwar insbesondere in Umfangsrichtung, besitzt eines der Trägerelemente abgewinkelte Laschen, die sich in entsprechend geformte Taschen des anderen Trägerelements formschlüssig erstrecken. Dadurch soll eine sichere Umfangskraftübertragung zwischen den Trägerelementen gewährleistet werden.

Weiterhin beschreibt die DE 10 2005 009 398 A1 ein Bremsbelagspaar für eine Scheibenbremse, wobei die Belagträgerplatte entsprechend den jeweils auftretenden Belastungen, insbesondere Biegebelastungen und dem Bauraum eines Bremssattels angepasst, unterschiedliche Konfigurationen und Dimensionierungen aufweist. So ist dort beispielsweise vorgesehen, die Belagträgerplatte als Gussteil auszubilden, wobei an der Belagträgerplatte Vertiefungen und/oder Erhebungen sowie Löcher vorsehbar sind, welche mit dem Reibbelag formschlüssig korrespondieren. Dabei wird die Belagträgerplatte vorzugsweise als Gussteil hergestellt, was eine flexible Formgebung der Belagträgerplatte, etwa mit Versteifungsrippen und Formschlussteilen ermöglicht.

Die Ausbildung von Belagträgerplatten als Gussteil anstelle eines Blechformteils, wie etwa einer Stahlplatte ist erst ab einer hohen Stückzahl rentabel. Da der Markt für Nutzfahrzeuge nicht mit jenen der Personenkraftwagen vergleichbar ist und auch hier zwischen den unterschiedlichen Bremsentypen eine hohe Diversität besteht, werden Bremsbeläge eines bestimmten Bremsentyps nur in einer verhältnismäßig geringen Stückzahl gefertigt.

Ferner weisen die in der DE 10 2005 009 398 A1 beschriebenen Belagträgerplatten eine recht komplexe innere Geometrie auf, um den Festigkeits- und Belastungsanforderungen hinreichend entsprechen zu können. Die Ausbildung und Gestaltung sowie die Fertigung solcher Belagträgerplatten, so etwa mit festigkeitserhöhenden Stegen, ist aufgrund der an die auftretenden Belastungen angepassten Geometrie verhältnismäßig teuer und kompliziert. Nicht zuletzt wird für derartige Bremsbeläge und Belagträgerplatten verhältnismäßig viel Material benötigt, sodass im Endeffekt deren Gesamtgewicht steigt.

### Aufgabe

Der vorliegenden Erfindung liegt demgegenüber die Aufgabe zugrunde, einen Bremsbelag bzw. ein Bremsbelag-Bausatz zur Verfügung zu stellen, der kostengünstig und einfach in der Herstellung ist. Zudem soll der Materialverbrauch verringert und die einzelnen Bestandteile evtl. einer Wiederverwertung zugeführt werden können. Des Weiteren soll nach der Erfindung eine verbesserte akustische und thermische Entkopplung zwischen dem Bremsbelag und einem Bremsstößel, welcher die auf den Bremsbelag einwirkende Zuspannkraft zur Verfügung stellt, verbessert werden. Auch ist es Ziel der Erfindung, das Gewicht des Bremsbelags und zugehöriger Komponenten zu verringern.

### Erfindung und vorteilhafte Wirkungen

Die der Erfindung zugrundeliegende Aufgabe wird mittels eines Bremsbelags gemäß Patentanspruch 1 und einer Scheibenbremse gemäß Patentanspruch 15 gelöst. Weitere vorteilhafte Ausführungen der Erfindung sind in den jeweiligen Unteransprüchen angegeben.

Der erfindungsgemäße Bremsbelag gemäß Anspruch 1 ist insbesondere für Scheibenbremsen von Nutzfahrzeugen ausgelegt und dimensioniert. Er weist eine Belagträgerplatte und einen daran angeordneten Reibbelag auf, der mit einer rotierenden Bremsscheibe bei Einleitung eines Bremsvorgangs reibend in Eingriff bringbar ist. An der dem Reibbelag abgewandten Seite der Trägerplatte ist zumindest ein Krafteinleitungsbereich vorgesehen. An diesem Krafteinleitungsbereich der Trägerplatte gelangt in Einbau- oder Betriebsstellung der Bremse ein Adapter zur Anlage. Dieser Adapter steht andererseits mit dem Bremsstößel oder dem Bremskolben, ggf. mit dessen Druckstück in Wirkverbindung. Der Adapter befindet sich somit im Kraftübertragungsstrang zwischen Bremszylinder oder Bremsstößel und der in Axialrichtung verschiebbar gelagerten Trägerplatte bzw. dem Bremsbelag. Dem Adapter kommt dabei insbesondere eine druckverteilende Aufgabe zu. So ist vorgesehen, dass der Adapter die vom Bremsstößel auf ihn einwirkenden Zuspannkräfte im Wesentlichen gleichmäßig auf den Krafteinleitungsbereich verteilt, sodass über den Krafteinleitungsbereich eine möglichst homogene Druckeinwirkung erzeugt werden kann. Weiterhin sind der Adapter und die Trägerplatte, bezogen auf die Bremsscheibengeometrie zumindest in Radialrichtung und in Umfangs- oder Umlaufrichtung der Bremsscheibe gegeneinander fixiert. Zu dieser Fixierung sind zumindest an der Trägerplatte Haltemittel vorgesehen, die dazu ausgebildet sind, den Adapter zumindest in den beiden angegebenen Richtungen an der Trägerplatte und folglich am Bremsbelag anzuordnen und dort zu fixieren. Sowohl an der Trägerplatte als auch am Adapter sind einander korrespondierende Haltemittel vorgesehen, bzw. unmittelbar daran ausgebildet, die ein Verrutschen des Adapters gegenüber der Trägerplatte senkrecht zur Axialrichtung, welche mit der Drehachse der Bremsscheibe zusammenfällt, verhindern.

Erfindungsgemäß ist der Adapter lediglich an den Krafteinleitungsbereichen der Trägerplatte angeordnet und lösbar mit dieser verbunden. Durch diese Maßnahme wird erreicht, dass einerseits die außerhalb des Krafteinleitungsbereiches liegenden Teile der Trägerplatte dünnwandiger als bisher ausgebildet werden können und andererseits der Adapter wiederverwendbar bzw. weiterverwertbar ist, wenn der Reibbelag des Bremsbelages verschlissen ist.

Insbesondere ermöglicht die Verwendung dieses Adapters die Belagträgerplatte als Stahlplatte oder als Blechformteil auszubilden, sodass ohne nennenswerte Einbußen an die mechanische Belastbarkeit der Belagträgerplatte auf den Einsatz von Gussteilen in kosten- und gewichtsreduzierender Weise verzichtet werden kann. Auch ist der erfindungsgemäße Adapter wiederverwendbar und wiederverwertbar. Ist beispielsweise der Reibbelag des Bremsbelags nach bestimmungsgemäßen Gebrauch verschlissen, so kann der den Reibbelag und die Belagträgerplatte aufweisende Bremsbelag ausgetauscht, der zugehörige Adapter aber weiter verwendet werden. Dieser modul- oder bausatzartige Aufbau des Bremsbelag-Kits erlaubt, die Belagträgerplatte dünnwandiger auszugestalten, was mit einem Kostenvorteil und mit einer Gewichts- und Materialeinsparung einhergehen kann.

Erfindungsgemäß ist vorgesehen, dass die trägerplattenseitigen Haltemittel ausschließlich im Krafteinleitungsbereich der Trägerplatte angeordnet sind und entweder als von der Plattenebene hervorstehende Erhöhung oder als Vorsprung und/oder als eine gegenüber der Plattenebene zurückspringende bzw. in die Plattenebene hineinragende Vertiefung ausgebildet sind.

Dabei ist weiterhin vorgesehen, dass die zugehörigen adapterseitigen Haltemittel als korrespondierende Erhöhung, Vorsprung oder Vertiefung ausgebildet sind, sodass beim Aufeinandersetzen von Trägerplatte und Adapter in Axialrichtung fluchtend gegenüberliegende Haltemittel spätestens dann ineinandergreifen, wenn der Adapter im Krafteinleitungsbereich der Trägerplatte zur Anlage gelangt.

In einer weiteren vorteilhaften Ausgestaltung der Erfindung ist vorgesehen, dass die Haltemittel der Trägerplatte und/oder die Haltemittel des Adapters höchstens 30 %, vorzugsweise höchstens 20 %, vorzugsweise höchstens 10 % oder höchstens 5 % der Fläche des Krafteinleitungsbereichs einnehmen. Aufseiten des Adapters ist vorgesehen, dass die Haltemittel höchstens 30 %, 20 %, 10 % oder höchstens 5 % derjenigen Fläche des Adapters einnehmen, welche am Krafteinleitungsbereich der Trägerplatte in Betriebsstellung der Bremse zu liegen kommt.

Dadurch, dass die Haltemittel nur einen verhältnismäßig geringen Anteil der Fläche des Krafteinleitungsbereichs ausmachen, kann über die übrige Fläche eine besonders homogene und gleichverteilte Krafteinleitung vom Bremsstößel auf die Trägerplatte erfolgen.

Nach einer Weiterbildung ist vorgesehen, dass das als Vertiefung ausgebildete Haltemittel als Durchgangsöffnung ausgebildet ist. Diese Durchgangsöffnung kann sowohl an der Trägerplatte als auch an dem Adapter vorgesehen werden. Weiterhin ist vorgesehen, dass die trägerplattenseitigen und/oder adapterseitigen Haltemittel eine zylindrische oder konische Außenkontur aufweisen. Eine konische Ausgestaltung kann sogar eine Fixierung von Trägerplatte und zugeordnetem Adapter in Axialrichtung bewirken. Zudem können die schräg verlaufenden Seitenflächen konisch ausgebildeter Vorsprünge oder Vertiefungen als Einführhilfe bei der wechselseitigen Montage von Belagträgerplatte und Adapter dienen.

Erfindungsgemaß ist weiter vorgesehen, dass einer dem Adapter zugewandten Erhöhung oder Vertiefung des Krafteinleitungsbereichs der Belagträgerplatte an der dem Reibbelag zugewandten Seite der Trägerplatte eine korrespondierende Vertiefung oder Erhöhung zugeordnet ist. Das heißt, ein dem Adapter zugewandter und an der Trägerplatte ausgebildeter Vorsprung ist an der gegenüberliegenden Seite der Trägerplatte, dem Reibbelag zugewandt, als entsprechende Vertiefung ausgestaltet.

Gleiches kann für eine dem Adapter zugewandte Vertiefung in der Belagträgerplatte gelten. Dieser kann eine in den Reibbelag hineinragende Erhöhung oder ein entsprechender Vorsprung zugeordnet werden. Insbesondere können die in die Belagträgerplatte eingearbeiteten Vertiefungen oder Erhöhungen bzw. Vorsprünge durch lokale Materialumformung eingearbeitet werden. Hierfür kommt Stanzen einer aus Stahl gefertigten Belagträgerplatte zum Einsatz.

Nach einer Weiterbildung der Erfindung ist vorgesehen, dass die Haltemittel zentrisch und/oder symmetrisch zur Geometrie des Krafteinleitungsbereichs der Trägerplatte angeordnet sind. So kann insbesondere vorgesehen sein, den Krafteinleitungsbereich mit einer kreisförmigen, rechteckigen oder ovalen Geometrie auszugestalten und ein oder mehrere Haltemittel vorzugsweise mit einer zylindrischen und daher kreisförmigen Geometrie inmitten des Krafteinleitungsbereichs anzuordnen oder im Falle mehrerer Haltemittel diese symmetrisch zum Mittelpunkt oder zu einer zentrisch durch den Krafteinleitungsbereich verlaufenden Achse anzuordnen. Eine solche zentrische und/oder symmetrische Anordnung der Haltemittel bezüglich der Geometrie des Krafteinleitungsbereichs ist für eine homogene Kraftverteilungscharakteristik von Vorteil.

Erfindungsgemäß sind ferner die Haltemittel derart ausgestaltet, dass der Adapter und die Trägerplatte lösbar miteinander verbunden bzw. lösbar zueinander fixiert sind. Es ist insbesondere vorgesehen, dass die trägerplattenseitigen und/oder adapterseitigen Haltemittel lediglich zur Lagefixierung in der Ebene senkrecht zur Axialrichtung von Trägerplatte und Adapter ausgebildet sind. Eine endgültige Fixierung und Anordnung von Trägerplatte bzw. Bremsbelag und Adapter zueinander kann beispielsweise erst im Einbauzustand innerhalb des Bremssattels erreicht werden, wenn die Geometrie des Bremssattels und am Bremssattel vorgesehene Halte- bzw. Rückstellelemente eine Axialbewegung zwischen Trägerplatte und Adapter effektiv verhindern.

Nach einer Weiterbildung der Erfindung ist vorgesehen, dass der Adapter bereits in einer Vormontagestellung, bevor Bremsbelag und Adapter zusammen in einen Belagschacht des Bremssattels eingesetzt werden, mittels der trägerplattenseitigen und/oder der adapterseitigen Haltemittel lösbar an der dem Reibbelag abgewandten Seite der Trägerplatte angeordnet ist. Insoweit können der Adapter und der Bremsbelag eine gemeinsame bauliche, aber voneinander lösbare Einheit bilden.

Nach einer besonders vorteilhaften Weiterbildung der Erfindung ist vorgesehen, zwischen der Trägerplatte und dem Adapter eine Isolationsschicht anzuordnen. Diese Isolationsschicht hat eine Wärmedämmung oder eine thermische Isolation als auch ein akustisches Entkoppeln zwischen dem Adapter und der Trägerplatte zum Ziel. Demgemäß weist diese Isolationsschicht Schwingungen absorbierende Eigenschaften auf. Sie ist insbesondere hinreichend elastisch, um die beim Bremsvorgang auftretenden Vibrationen zumindest teilweise zu kompensieren und zu absorbieren. Weiterhin ist die Isolationsschicht aus einem Material mit einer geringen Wärmeleitfähigkeit gefertigt, sodass nicht nur eine akustische, sondern auch oder alternativ eine thermische Entkopplung zwischen dem Bremsbelag und dem Bremsstößel erreicht werden kann.

Eine thermische Isolation ist aufgrund der beim Bremsen auftretenden hohen Temperaturen im Bereich mehrerer 100 °C von enormer Bedeutung für die Funktionsfähigkeit des Bremsstößels und damit der gesamten Bremse. Die Isolationsschicht zwischen Trägerplatte und dem Adapter trägt dazu bei, dass auch bei hohen Bremstemperaturen der Bremsstößel nicht über ein maximal zulässiges Maß hinaus aufgeheizt wird, in welchem seine Funktionsfähigkeit beeinträchtigt wäre. Die Ausfallsicherheit der gesamten Bremse kann somit erhöht werden.

Die Anordnung der Isolationsschicht zwischen zwei baulich getrennten Bauteilen des erfindungsgemäßen Bremsbelag-Bausatzes oder Bremsbelag-Kits ist ferner dahingehend von Vorteil, dass beim Austausch eines verschlissenen Bremsbelags die Isolationsschicht ebenfalls ausgetauscht werden kann. Der Adapter ist weitgehend verschleißfrei und kann weiterverwendet werden, während mit einem neuen Bremsbelag und einer neuen Isolationsschicht ein dem Neuzustand der Bremse vergleichbares Bremsverhalten wiederhergestellt werden kann.

Nach einer Weiterbildung der Erfindung ist vorgesehen, dass die Isolationsschicht von den trägerplattenseitigen und/oder von den adapterseitigen Haltemitteln durchsetzt ist. Folglich weist die Isolationsschicht im Bereich der Haltemittel, mittels welcher Adapter und Trägerplatte zueinander fixierbar sind, Aussparungen auf. Da die Isolationsschicht gegenüber dem Adapter- bzw. Trägerplattenmaterial verhältnismäßig elastisch und weich ausgebildet ist, würde sie eine Art formschlüssige Verbindung in der Ebene transversal zur Axialrichtung bzw. transversal zur Achse der Bremsscheibe beeinträchtigen. Mittels der in der Isolationsschicht vorgesehenen Aussparungen wird hingegen die Fixierung zwischen Trägerplatte und Adapter kaum merklich beeinträchtigt.

Ferner ist die Größe bzw. die laterale Ausdehnung der Haltemittel und der damit korrespondierenden Aussparungen in der Isolationsschicht von Bedeutung. Dadurch, dass die Haltemittel flächenmäßig nur einen geringen Prozentsatz der Gesamtfläche des Krafteinleitungsbereichs ausmachen und dementsprechend die Aussparung in der Isolationsschicht einen nur verhältnismäßig geringen Teil der Fläche der Isolationsschicht ausmacht, kann eine besonders gute thermische und mechanische bzw. akustische Entkopplung mittels der Isolationsschicht bewerkstelligt werden.

Die Flächenabschnitte im Bereich der einander korrespondierenden Haltemittel von Trägerplatte und Adapter sind gegenüber der Gesamtfläche des Krafteinleitungsbereichs bzw. der Gesamtfläche der Isolationsschicht verhältnismäßig gering. Sie betragen höchstens 30 %, 20 %, 10 % oder 5 %. Lediglich in diesem kleinen Teilbereich gelangen die einander korrespondierenden Vorsprünge und Vertiefungen von Adapter und Belagträgerplatte in unmittelbare Anlagestellung, was einer thermischen und akustischen Entkopplung womöglich entgegenwirken könnte.

Alternativ oder ergänzend hierzu kann jedoch auch vorgesehen sein, die Dicke der Isolationsschicht etwas größer als die Erhebung bzw. Vertiefung der Haltemittel zu wählen, sodass etwa ein an der Trägerplatte hervorstehender Vorsprung mit seiner Stirnseite nicht mit dem Boden einer zugeordneten Vertiefung eines Adapters in unmittelbarer Anlagestellung gelangt, sondern dass zwischen diesen beiden Komponenten zumindest im Auslieferungszustand der Bremse ein gewisser Luftspalt erhalten bleibt, der gleichermaßen zu einer thermischen und akustischen Entkopplung beiträgt.

Nach einer Weiterbildung der Erfindung ist vorgesehen, dass die Isolationsschicht eine phenolharzgebundene Masse aufweist. Es ist insbesondere vorgesehen, in die Isolationsschicht Graphit- und/oder Aramidfasern einzubinden. Vorzugsweise können dabei auch diverse Kautschukmaterialien, wie etwa Synthesekautschuke, wie Butylkautschuk (IIR), Nitril-Kautschuk (NWR), hydrierter Nitril-Kautschuk (HNWR) und dergleichen Verwendung finden. Es ist insbesondere vorgesehen, die Graphit- und/oder Aramidfasern in vulkanisierte kautschuk- oder phenolharzartige Materialien einzubinden.

Weiterhin ist vorgesehen, die Trägerplatte und den Adapter als Stahlplatte bzw. als Blechformteil auszubilden.

Nach einem weiteren unabhängigen Aspekt betrifft die Erfindung einen Adapter, welcher zur Anordnung zwischen einem Druckstück eines Bremsstößels und einem Bremsbelag einer Nutzfahrzeug-Scheibenbremse vorgesehen ist. Am Adapter sind Haltemittel ausgebildet, welche zumindest zur Fixierung von Adapter und Bremsbelag, insbesondere dessen Belagträgerplatte in Radialrichtung und in Umfangsrichtung, bezogen auf die Geometrie der Bremsscheibe, ausgebildet ist. Vorzugsweise sind auch an der Trägerplatte Haltemittel vorgesehen, welche mit den adapterseitigen Haltemitteln zur relativen Fixierung von Adapter und Belagträgerplatte zusammenwirken. Dabei ist der Adapter lediglich an dem Krafteinleitungsbereich der Trägerplatten angeordnet und lösbar mit dieser verbunden.

Der Adapter weist vorzugsweise eine flächige oder scheibenartige Außenkontur auf, welche im Wesentlichen der Kontur des an der Trägerplatte vorgesehenen Krafteinleitungsbereichs entspricht. Die am Adapter ausgebildeten oder angeformten und zur Belagträgerplatte hin ausgerichteten Haltemittel sind als von der Adapterfläche hervorspringende Erhöhungen und/oder als von der Adapterfläche zurückspringende Vertiefung ausgebildet. Diese Erhöhungen bzw. Vertiefungen wirken mit entsprechenden Vertiefungen bzw. Erhöhungen oder Vorsprüngen der Belagträgerplatte zusammen.

Weiterhin ist vorgesehen, dass der nach Art einer Druckverteilerplatte ausgebildete Adapter eine der Trägerplatte zugewandten Erhöhung oder Vertiefung an der dem Bremsstößel zugewandten gegenüberliegenden Seite eine entsprechende Vertiefung oder Erhöhung aufweist. Insbesondere weist der im Wesentlichen eben ausgestaltete, scheiben- oder blockartig geformte Adapter eine im Bereich der Haltemittel lokale Materialumformung auf. Diese wird durch Stanzen einer aus Stahl gefertigten Adapterplatte kostengünstig und effizient in das Material eingearbeitet.

Weiterhin ist vorgesehen, dass der Adapter in Axialrichtung eine Dicke aufweist, die zumindest dem 1-bis 3-Fachen der Dicke der Trägerplatte entspricht. Hierdurch kann in vorteilhafter Weise gewährleistet werden, dass bei Einleitung eines Bremsvorgangs der Adapter im Wesentlichen keinen ungewollten Umformungen unterliegt, sondern eine ausreichende Festigkeit zur nahezu unverfälschten Weiterleitung der in ihn eingeleiteten Druckkraft an die Belagträgerplatte aufweist.

Weiterhin ist vorgesehen, dass an der der Trägerplatte zugewandten Seite des Adapters eine Isolationsschicht angeordnet ist. Diese Isolationsschicht kann lösbar an der Trägerplatte angeordnet sein. Alternativ kann die Isolationsschicht auch in einer Vormontagestellung mit der zugeordneten Seite der Belagträgerplatte verklebt sein. Dies ermöglicht insbesondere beim Austauschen eines verschlissenen Reibbelags, dass die Isolationsschicht in einfacher Art und Weise vom Adapter zu lösen ist.

Nach einem weiteren unabhängigen Aspekt betrifft die Erfindung eine Scheibenbremse für Nutzfahrzeuge, welche zumindest einen Bremsbelag und einen Adapter, wie zuvor beschrieben, aufweist.

### Ausführungsbeispiel

Weitere Ziele, Merkmale sowie vorteilhafte Anwendungsmöglichkeiten der vorliegenden Erfindung werden durch nachfolgende Beschreibung eines Ausführungsbeispiels anhand der Zeichnungen erläutert.

Es zeigen:
- Fig. 1: eine schematische Darstellung eines Reibbelags in Draufsicht und
- Fig. 2: eine Querschnittsdarstellung des Reibbelags mit angeordnetem Adapter gemäß Figur 1.

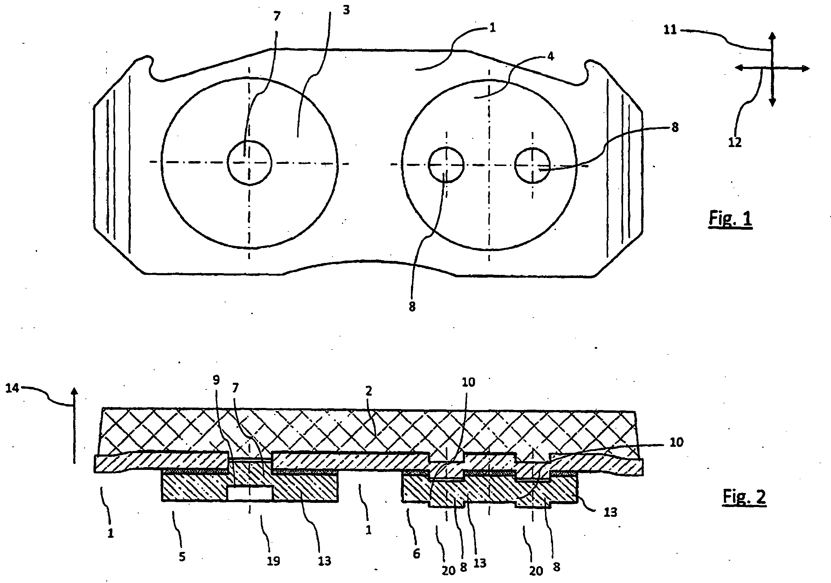

In der Zusammenschau der Figuren 1 und 2 ist ein Bremsbelag mit zwei Adaptern 5, 6 gezeigt, welche an der Unterseite einer Belagträgerplatte 1 in deren Krafteinleitungsbereichen 3, 4 zu liegen kommen. Die Krafteinleitungsbereiche 3, 4 sind, wie in Figur 1 ersichtlich, als zirkularsymmetrische Kreise ausgebildet. Inmitten des Krafteinleitungsbereichs 3 weist die Belagträgerplatte 1 eine Durchgangsöffnung 7 auf, in welcher der zugehörige Adapter 5 mit einem Vorsprung 9 zur Fixierung von Adapter 5 und Belagträgerplatte 1 eingreift. Durch diese in Radialrichtung 11 und Umfangsrichtung 12 gebildete formschlüssige Verbindung zwischen Adapter 5 und Trägerplatte 1 kann ein Verrutschen zwischen dem Adapter 5 und der Belagträgerplatte 1 effektiv verhindert werden.

Zwischen dem Adapter 5 und der in Figur 2 unten liegenden rückseitigen, dem Reibbelag 2 abgewandten Oberfläche der Belagträgerplatte 1 ist eine Isolationsschicht 13 vorgesehen. Diese weist eine ausreichende Elastizität und Kompressibilität auf, um den Bremsbelag bzw. die Belagträgerplatte 1 mechanisch von einem an der Unterseite des Adapters 5 zur Anlage gelangenden Bremsstößel zu entkoppeln. Auch weist die Isolationsschicht 13 eine verhältnismäßig geringe Wärmeleitung auf, sodass mittels der Isolationsschicht 13 auch eine vorteilhafte thermische Entkopplung zwischen dem Bremsbelag und dem Bremszylinder bzw. dem Bremsstößel zur Verfügung gestellt werden kann.

Der Adapter 6 ist im Vergleich zum Adapter 5 unterschiedlich aufgebaut. Er weist an seiner, dem Krafteinleitungsbereich 4 der Belagträgerplatte 1 zugewandten Oberfläche zwar ebenfalls eine Isolationsschicht 13 auf. Jedoch ist der Adapter 6 mit insgesamt zwei zylindrischen oder konischen Vertiefungen 10 ausgestattet, in welchen korrespondierende Vorsprünge 8 der Belagträgerplatte 1 in der in Figur 2 gezeigten Montagestellung zu liegen kommen. Die beiden Vorsprünge 8 bzw. Vertiefungen 10 sind, wie in Figur 1 angedeutet, symmetrisch zur Mitte des zweiten Krafteinleitungsbereichs 4 der Belagträgerplatte 1 angeordnet. Die Verwendung von zwei voneinander beabstandeten Haltemittel eines Krafteinleitungsbereichs 4 stellt zugleich eine Verdrehsicherung des Adapters 4 gegenüber der Trägerplatte 1 zur Verfügung.

An der Unterseite, das heißt der der Belagträgerplatte 1 abgewandten Seite des Adapters 6 sind den an der Oberseite ausgebildeten Vertiefungen 10 entsprechende Erhöhungen bzw. Vorsprünge 20 ausgebildet. Die Geometrie und Position von Erhöhungen 20 und gegenüberliegenden Vertiefungen 10 an dem Adapter 6 wird durch Stanzen erzeugt. Die Erhöhungen bzw. die Vorsprünge 20 stellen wiederum ein probates Haltemittel für den mit dem Adapter 6 in Eingriff gelangenden, in den Figuren nicht explizit gezeigten Stößel bzw. für das Druckstück des Bremskolbens zur Verfügung.

Gleiches gilt für den am Adapter 5 ausgebildeten Vorsprung 9 und die an dessen Unterseite vorgesehene Vertiefung 19.

Die Isolationsschicht 13 weist im Bereich der Haltemittel 7, 9, 8, 10 Aussparungen auf, damit der zwischen Adapter 5, 6 und Belagträgerplatte 1 erzielbare Formschluss nicht beeinträchtigt wird. Zudem ist vorgesehen, die Fläche der Haltemittel 7, 8, 9, 10 gegenüber der Fläche des jeweiligen Krafteinleitungsbereichs 3, 4 möglichst gering zu halten, da aufgrund des Fehlens der Isolationsschicht 13 im Bereich der Haltemittel 7, 8, 9, 10 an diesen Stellen ggf. eine erhöhte thermische bzw. akustische Kopplung zwischen Belagträgerplatte und dem jeweiligen Adapter 5, 6 gegeben sein kann.

Durch flächenmäßige Minimierung der Haltemittel 7, 9, 8, 10 können derartige thermische bzw. mechanische Kopplungen auf ein Minimum reduziert werden. Die Ausgestaltung der als Vorsprünge und Vertiefungen ausgebildeten Haltemittel 7, 9, 8, 10 ist im dargestellten Ausführungsbeispiel im Wesentlichen zylindrisch. Sie können aber auch quadratisch, rechteckig, hexagonal, mit Schlüsselflächen versehen oder konisch ausgebildet sein. Eine solche konische Ausgestaltung stellt gleichermaßen eine Einführhilfe beim Zusammenfügen von Adapter 5, 6 und Belagträgerplatte 1 dar, wenn nämlich die Teile in Axialrichtung sozusagen rastend ineinandergefügt oder ineinander geschoben werden.

### Bezugszeichenliste

- 1: Belagträgerplatte
- 2: Reibbelag
- 3: Krafteinleitungsbereich
- 4: Krafteinleitungsbereich
- 5: Adapter
- 6: Adapter
- 7: Durchgangsöffnung
- 8: Vorsprung
- 9: Vorsprung
- 10: Vertiefung
- 11: Radialrichtung
- 12: Umfangsrichtung
- 13: Isolationsschicht
- 14: Axialrichtung
- 18: Vertiefung
- 19: Vertiefung
- 20: Vorsprung

## Patentansprüche

1. Bremsbelag, insbesondere für eine Nutzfahrzeugscheibenbremse,
mit einer Trägerplatte (1), mit einem an der Trägerplatte (1) angeordneten Reibbelag (2) und mit einem Adapter (5, 6), der dazu bestimmt ist, in einer mit einem Bremsstößel oder einem Bremskolben einer Bremse in Wirkverbindung zu stehen, wobei zur Fixierung von Adapter (5, 6) und Trägerplatte (1) zumindest in Radialrichtung (11) und Umfangsrichtung (12) bezogen auf die Bremsscheibengeometrie, an der Trägerplatte (1) Haltemittel (7, 8) vorgesehen sind, welche mit adapterseitig vorgesehenen Haltemitteln (9, 10) korrespondieren, **wobei** die Trägerplatte (1) auf der dem Reibbelag abgewandten Seite zumindest einen Krafteinleitungsbereich (3, 4) und Teile aufweist, die außerhalb des Krafteinleitungsbereichs liegen, **wobei** der Adapter (5, 6) lediglich an dem zumindest einen Krafteinleitungsbereich (3, 4) der Trägerplatte (1) angeordnet und lösbar mit dieser verbunden ist, wobei der Adapter (5, 6) an seiner der Trägerplatte (1) abgewandten Seite eine Erhöhung (20) oder eine Vertiefung (19) aufweist, die ein Haltemittel für einen mit dem Adapter in Eingriff bringbaren Bremsstößel sind, wobei die trägerplattenseitigen Haltemittel (7, 8) im Krafteinleitungsbereich (3, 4) angeordnet sind, **dadurch gekennzeichnet, dass** entweder die trägerplattenseitigen Haltemittel (7, 8) als von der Plattenebene hervorstehende Erhöhung (8) und die Haltemittel des Adapters als von der Adapterfläche zurückspringende Vertiefung (10) ausgebildet sind, wobei der zurückspringenden Vertiefung (10) eine in Geometrie und Position korrespondierende, und durch Stanzen erzeugte, dem Druckstück des Bremsstößels zugewandte Erhöhung (20) des Adapters (5, 6) zugeordnet ist, oder die trägerplattenseitigen Haltemittel (7, 8) als eine gegenüber der Plattenebene zurückspringende Vertiefung (7) ausgebildet und die Haltemittel des Adapters als von der Adapterfläche hervorspringende Erhöhung (9) ausgebildet sind, wobei der hervorspringenden Erhöhung (9) eine in Geometrie und Position korrespondierende, und durch Stanzen erzeugte, dem Druckstück des Bremsstößels zugewandte Vertiefung (19) des Adapters (5, 6) zugeordnet ist.

2. Bremsbelags nach einem der vorhergehenden Ansprüche, wobei die Haltemittel (7, 8) höchstens 30 %, höchstens 20 %, höchstens 10 % oder höchstens 5 % der Fläche des Krafteinleitungsbereichs (3, 4) einnehmen.

3. Bremsbelag nach einem der vorhergehenden Ansprüche 1 oder 2, wobei die Vertiefung (7) als Durchgangsöffnung ausgebildet ist.

4. Bremsbelag nach einem der vorhergehenden Ansprüche, wobei die trägerplattenseitigen und/oder adapterseitigen Haltemittel (7, 8, 9, 10) zylindrisch oder konisch ausgebildet sind.

5. Bremsbelag nach einem der vorhergehenden Ansprüche, wobei der dem Adapter (5, 6) zugewandten Erhöhung (8) oder Vertiefung des Krafteinteitungsbereichs an der dem Reibbelag (2) zugewandten Seite der Trägerplatte (1) eine korrespondierende Vertiefung (18) oder Erhöhung zugeordnet ist.

6. Bremsbelag nach Anspruch 5, wobei die an gegenüberliegenden Seiten der Trägerplatte vorgesehenen Vertiefungen (7, 18) und Erhöhungen (8) mittels Stanzen oder eines vergleichbaren Umformprozesses aus einer im Wesentlichen eben ausgebildeten Platte erzeugbar sind.

7. Bremsbelag nach einem der vorhergehenden Ansprüche, wobei die Haltemittel (7, 8) zentrisch und/oder symmetrisch zur Geometrie des Krafteinleitungsbereichs (3, 4) angeordnet sind.

8. Bremsbelag nach Anspruch 7, wobei zwischen der Trägerplatte (1) und dem Adapter (5, 6) eine Isolationsschicht (13) angeordnet ist.

9. Bremsbelag nach Anspruch 8, wobei die Isolationsschicht (13) von den trägerplattenseitigen und/oder adapterseitigen Haltemitteln (8, 9) durchsetzt ist.

10. Bremshelag nach einem der Ansprüche 8 oder 9, wobei die Isolationsschicht (13) im Bereich der trägerplattenseitigen und/oder adapterseitigen Haltemittel (7, 8, 9, 10) eine Aussparung aufweist.

11. Bremsbelag nach einem der Ansprüche 8 bis 10, wobei die Isolationsschicht (13) mit Kautschuk und/oder Phenolharzen gebundene oder vulkanisierte Graphit- und/oder Aramidfasern aufweist.

12. Bremsbelag nach einem der vorhergehenden Ansprüche, wobei die Trägerplatte (1) und der Adapter (5, 6) als Stahlplatte ausgebildet ist

13. Bremsbelag nach einem der vorhergehenden Ansprüche, **dadurch gekennzeichnet, dass** der Adapter (5, 6) eine Dicke in Axialrichtung (14), welche zumindest dem 1,5 bis 3-fachen der Dicke der Trägerplatte (1) entspricht.

14. Scheibenbremse für Nutzfahrzeuge mit zumindest einem Bremsbelag nach einem der Ansprüche 1 bis 13.

## Claims

1. Brake pad, in particular for a utility vehicle disk brake,
having a carrier plate (1),
having a friction pad (2) arranged on the carrier plate (1) and
having an adapter (5, 6) which is designed to be operatively connected to a brake plunger or a brake piston of a brake, wherein,
for the fixing of the adapter (5, 6) and carrier plate (1) at least in a radial direction (11) and circumferential direction (12) with respect to the brake disk geometry, holding means (7, 8) are provided on the carrier plate (1), which holding means correspond with holding means (9, 10) provided on the adapter, wherein,
on the side facing away from the friction pad, the carrier plate (1) has at least one force introduction region (3, 4) and parts that are situated outside the force introduction region, wherein
the adapter (5, 6) is arranged only on the at least one force introduction region (3, 4) of the carrier plate (1) and is detachably connected to said carrier plate, wherein,
on its side facing away from the carrier plate (1), the adapter (5, 6) has an elevation (20) or a depression (19), these being holding means for a brake plunger that can be placed in engagement with the adapter, wherein
the carrier plate-side holding means (7, 8) are arranged in the force introduction region (3, 4), **characterized in that**
either the carrier plate-side holding means (7, 8) are in the form of an elevation (8) that projects from the plane of the plate and the holding means of the adapter are in the form of a depression (10) that is recessed in relation to the adapter surface, wherein the recessed depression (10) is assigned an elevation (20) of the adapter (5, 6), which elevation corresponds in terms of geometry and position, is produced by punching and faces toward the thrust piece of the brake plunger, or the carrier plate-side holding means (7, 8) are in the form of a depression (7) that is recessed in relation to the plane of the plate and the holding means of the adapter are in the form of an elevation (9) that projects from the adapter surface, wherein the projecting elevation (9) is assigned a depression (19) of the adapter (5, 6), which depression corresponds in terms of geometry and position, is produced by punching and faces toward the thrust piece of the brake plunger.

2. Brake pad according to one of the preceding claims, wherein the holding means (7, 8) cover at most 30%, at most 20%, at most 10% or at most 5% of the surface area of the force introduction region (3, 4).

3. Brake pad according to one of the preceding Claims 1 or 2, wherein the depression (7) is in the form of a passage opening.

4. Brake pad according to one of the preceding claims, wherein the carrier plate-side and/or adapter-side holding means (7, 8, 9, 10) are of cylindrical or conical form.

5. Brake pad according to one of the preceding claims, wherein the elevation (8) or depression, which faces toward the adapter (5, 6), of the force introduction region is assigned a corresponding depression (18) or elevation on that side of the carrier plate (1) which faces toward the friction pad (2).

6. Brake pad according to Claim 5, wherein the depressions (7, 18) and elevations (8) provided on opposite sides of the carrier plate can be produced, proceeding from a substantially planar plate, by means of punching or a similar deformation process.

7. Brake pad according to one of the preceding claims, wherein the holding means (7, 8) are arranged centrally and/or symmetrically with respect to the geometry of the force introduction region (3, 4).

8. Brake pad according to Claim 7, wherein an insulation layer (13) is arranged between the carrier plate (1) and the adapter (5, 6).

9. Brake pad according to Claim 8, wherein the carrier plate-side and/or adapter-side holding means (8, 9) extend through the insulation layer (13).

10. Brake pad according to either of Claims 8 and 9, wherein the insulation layer (13) has a cutout in the region of the carrier plate-side and/or adapter-side holding means (7, 8, 9, 10).

11. Brake pad according to one of Claims 8 to 10, wherein the insulation layer (13) has graphite and/or aramide fibres bonded or vulcanized with natural rubber and/or phenolic resins.

12. Brake pad according to one of the preceding claims, wherein the carrier plate (1) and the adapter (5, 6) is in the form of a steel plate.

13. Brake pad according to one of the preceding claims, **characterized in that** the adapter (5, 6) a thickness in the axial direction (14) which corresponds to at least 1.5 to 3 times the thickness of the carrier plate (1).

14. Disk brake for utility vehicles, having at least one brake pad according to one of Claims 1 to 13.

## Revendications

1. Garniture de frein, en particulier pour un frein à disque de véhicule utilitaire, avec une plaque porteuse (1), avec une garniture de friction (2) disposée sur la plaque porteuse (1) et avec un adaptateur (5, 6), prévu pour être en liaison fonctionnelle avec un poussoir de frein ou un piston de frein d'un frein, dans laquelle, pour la fixation de l'adaptateur (5, 6) et de la plaque porteuse (1) au moins dans la direction radiale (11) et dans la direction périphérique (12) par rapport à la géométrie du disque de frein, des moyens de fixation (7, 8) sont prévus au niveau de la plaque porteuse (1), lesquels correspondent à des moyens de fixation (9, 10) prévus du côté de l'adaptateur, dans laquelle la plaque porteuse (1) présente, du côté opposé à la garniture de friction, au moins une région d'introduction de force (3, 4) et des pièces qui sont situées à l'extérieur de la région d'introduction de force, dans laquelle l'adaptateur (5, 6) est disposé seulement au niveau de l'au moins une région d'introduction de force (3, 4) de la plaque porteuse (1) et est connecté de manière amovible à celle-ci, dans laquelle l'adaptateur (5, 6) présente, au niveau de son côté opposé à la plaque porteuse (1), un rehaussement (20) ou un renfoncement (19) qui constituent un moyen de fixation pour un poussoir de frein pouvant être amené en prise avec l'adaptateur, dans laquelle les moyens de fixation du côté de la plaque porteuse (7, 8) sont disposés dans la région d'introduction de force (3, 4),
**caractérisée en ce que**
soit les moyens de fixation du côté de la plaque porteuse (7, 8) sont réalisés sous forme de rehaussement (8) saillant depuis le plan de la plaque et les moyens de fixation de l'adaptateur sont réalisés sous forme de renfoncement (10) en retrait depuis la surface de l'adaptateur, le renfoncement en retrait (10) étant associé à un rehaussement (20) de l'adaptateur (5, 6), correspondant en termes de géométrie et position, produit par estampage et tourné vers la pièce de pression du poussoir de frein,
soit les moyens de fixation du côté de la plaque porteuse (7, 8) sont réalisés sous forme de renfoncement (7) en retrait par rapport au plan de la plaque et les moyens de fixation de l'adaptateur sont réalisés sous forme de rehaussement (9) faisant saillie depuis la surface de l'adaptateur, le rehaussement en saillie (9) étant associé à un renfoncement (19) de l'adaptateur (5, 6), correspondant en termes de géométrie et position, produit par estampage et tourné vers la pièce de pression du poussoir de frein.

2. Garniture de frein selon l'une quelconque des revendications précédentes, dans laquelle les moyens de fixation (7, 8) adoptent au maximum 30 %, au maximum 20 %, au maximum 10 % ou au maximum 5 % de la surface de la région d'introduction de force (3, 4).

3. Garniture de frein selon l'une quelconque des revendications 1 ou 2, dans laquelle le renfoncement (7) est réalisé sous forme d'ouverture de passage.

4. Garniture de frein selon l'une quelconque des revendications précédentes, dans laquelle les moyens de fixation du côté de la plaque porteuse et/ou du côté de l'adaptateur (7, 8, 9, 10) sont réalisés sous forme cylindrique ou conique.

5. Garniture de frein selon l'une quelconque des revendications précédentes, dans laquelle le rehaussement (8) tourné vers l'adaptateur (5, 6) ou le renfoncement de la région d'introduction de force au niveau du côté de la plaque porteuse (1) tourné vers la garniture de friction (2) est associé à un renfoncement (18) ou un rehaussement correspondant.

6. Garniture de frein selon la revendication 5, dans laquelle les renfoncements (7, 18) et les rehaussements (8) prévus au niveau des côtés opposés de la plaque porteuse peuvent être produits par estampage ou par un processus de formage comparable à partir d'une plaque essentiellement plane.

7. Garniture de frein selon l'une quelconque des revendications précédentes, dans laquelle les moyens de fixation (7, 8) sont disposés centralement et/ou symétriquement par rapport à la géométrie de la région d'introduction de force (3, 4).

8. Garniture de frein selon la revendication 7, dans laquelle une couche d'isolation (13) est disposée entre la plaque porteuse (1) et l'adaptateur (5, 6).

9. Garniture de frein selon la revendication 8, dans laquelle la couche d'isolation (13) est traversée par les moyens de fixation (8, 9) du côté de la plaque porteuse et/ou du côté de l'adaptateur.

10. Garniture de frein selon l'une quelconque des revendications 8 ou 9, dans laquelle la couche d'isolation (13) présente un évidement dans la région des moyens de fixation (7, 8, 9, 10) du côté de la plaque porteuse et/ou du côté de l'adaptateur.

11. Garniture de frein selon l'une quelconque des revendications 8 à 10, dans laquelle la couche d'isolation (13) présente des fibres de graphite et/ou d'aramide vulcanisées ou liées avec du caoutchouc et/ou des résines phénoliques.

12. Garniture de frein selon l'une quelconque des revendications précédentes, dans laquelle la plaque porteuse (1) et l'adaptateur (5, 6) sont réalisés sous forme de plaque d'acier.

13. Garniture de frein selon l'une quelconque des revendications précédentes, **caractérisée en ce que** l'adaptateur (5, 6) une épaisseur dans la direction axiale (14) qui correspond au moins à 1,5 à 3 fois l'épaisseur de la plaque porteuse (1).

14. Frein à disque pour des véhicules utilitaires comprenant au moins une garniture de frein selon l'une quelconque des revendications 1 à 13.
